# EUROPEAN PATENT SPECIFICATION

(11) **EP 2 503 676 B1**
(45) Date of publication and mention of the grant of the patent: **17.10.2018**
(21) Application number: 11159834.8
(22) Date of filing: 25.03.2011
(51) Int. Cl.: B60L 9/28, H02K 15/00, H02K 11/225

(54) **A method for mounting a resolver**
Verfahren zum Aufbau eines Resolvers
Procédé d'assemblage d'un résolveur

(43) Date of publication of application: 26.09.2012
(73) Proprietor: Bombardier Transportation GmbH, 10785 Berlin (DE)
(72) Inventor: Kumm, Thomas, SE-725 97 Västerås (SE); Andersson, Svante, SE-724 81 Västerås (SE); Blom, Ola, SE-754 30 Uppsala (SE); Galic, Johann, SE-735 31 Surahammar (SE)
(74) Representative: Bjerkéns Patentbyrå KB (Gävle)

(56) References cited:
- WO-A1-2010/015424
- US-A1- 2009 167 121
- US-A1- 2011 066 327

## Description

The present invention relates to a method for providing an electric synchronous machine with a resolver in a state able to deliver information about the instantaneous position of a rotor of said machine with respect to a stator of the machine to be used for controlling exchange of electric power between a winding of said stator and an said stator and an AC source or receiver according to the preamble of appended claim 1.

The synchronous machine may for instance be a reluctance machine or a permanent magnet machine, and a machine of the latter type will hereinafter mainly be discussed for illustrating the invention but not in any way restrict the invention thereto.

Although an electric machine of this type may operate as motor and/or generator this disclosure will focus mainly on the operation thereof as a motor.

In a permanent magnet machine the rotor has a plurality of permanent magnets, which may be buried in the rotor body or arranged on the circumferential surface thereof. By using a plurality of permanent magnets to produce the magnetic flux of the rotor a motor having lower rotor losses compared to an induction motor and thus higher efficiency will be achieved. It can also be built with a higher pole number, compared to an induction motor, without sacrificing performance, so that it can have a higher torque capability, features making such an electric machine particularly interesting as a track-bound vehicle electric machine for which a high torque capability with respect to a determined size of the motor is an important feature. This is also the reason why this particular application of such a machine will hereinafter be described without the purpose to restrict the invention thereto, but the invention is just as well applicable to machines used for instance within the industry, especially heavy such machines and/or machines operating at a high power, such as above 10 kW.

The reason for providing such a machine with a resolver is that it is for the efficiency of such a machine essential to with a high accuracy know the instantaneous position of the machine rotor with respect to the machine stator. Would the exchange of electric power between the stator winding and said AC source or receiver be controlled with even a minor incorrect assumption of said position this would result in substantial losses of electric power. A resolver has a resolver stator to be fixed with respect to the stator of the electric machine and a resolver rotor to be fixed with respect to the rotor of the machine. The resolver stator is normally built up of a magnetic flux carrying structure, and the resolver rotor may have a winding or not. There are different known ways to provide such an electric machine with a resolver in said state able to deliver information about the instantaneous position of the machine rotor with respect to the machine stator. These methods are rather complicated and do in some cases require a software adapted for each individual electric machine. The provision of the machine with a resolver in such a state may take place when the electric machine is mounted for the first use thereof, such as in connection with mounting the machine into a track-bound vehicle. However, the method may also be carried out when any part of the resolver or the entire resolver is replaced and a new resolver is mounted to the electric machine or other types of maintenance is carried out on the electric machine which may influence the state of such a resolver.

A method defined in the introduction is known through US 2009167121-A1.

The object of the present invention is to solve the problem of providing a method for providing an electric synchronous machine with a resolver in a state able to deliver information about the instantaneous position of a rotor of said machine with respect to a stator of the machine being improved with respect to such methods already known, especially by enabling determination of the relative position of the machine rotor and the machine stator for a certain relative position of the resolver rotor and the resolver stator with a high accuracy.

### SUMMARY OF THE INVENTION

This object is according to the invention obtained by providing such a method with the features of the characterizing part of appended claim 1. This way of controlling the converter means that it will after that be known exactly in which relative position the machine rotor and the machine stator are for a certain relative position of the resolver rotor and the resolver stator.

It will be necessary to control a said converter to make the machine rotor rotate with at least a certain number of revolutions, since a certain frequency of the voltage is necessary for obtaining a voltage which may be measured with a sufficient accuracy. How the converter is to be controlled to deliver a zero torque to the rotor through the stator winding appears from for instance WO 2010/015424. Accordingly, this publication explains how for an electric synchronous machine the torque applied on the rotor may be calculated from the stator flux and motor-current, in which the stator flux is calculated from the motor voltage. This means that the correct torque is measured independent of the position error of the resolver and is utilized in the present invention. The output of a torque controller will be the controller load angle (the angle between the stator flux and the resolver position), and the output of a flux controller will be the magnitude of the output voltage. The torque controller will adjust the load angle so that a zero torque is reached. If a position offset in the resolver is present the load angle will then be equal to the resolver position error when the torque is zero. Accordingly, the resolver position error will be reliably determined by adjusting the load angle to obtain a zero torque.

According to an embodiment of the invention step a) comprises aligning of a predetermined point, such as a starting point, of said stator winding with respect to a marking, such as optical or physical, on a stator body when fixing said winding with respect to the stator body. The stator winding may for instance be shrunk in place on a stator body, and it is then easy to ensure that a particular point of the stator winding is brought into alignment with a marking on the stator body, so that the position of the stator winding in the stator body is well known.

According to another embodiment of the invention step b) comprises aligning of the resolver stator with respect to the machine stator, such as by introduction of male members in female members, such as bolts in holes, when fixing the resolver stator with respect to the machine stator. This results in a possibility to with a high accuracy arrange the resolver stator in a certain relative position with respect to said stator winding.

According to another embodiment of the invention the resolver stator is aligned with respect to said machine stator by fixing the resolver stator by means allowing such fixing in only one possible position, which ensures achievement of a minimum of deviation of the position of the resolver stator from an optimum position thereof with respect to the machine stator winding.

According to another embodiment of the invention the method comprises a step of fixing a stator body of said machine stator in a predetermined position to a framework, such as a stator house, and in step b) the resolver stator is secured to said framework in a predetermined position and by that in a predetermined position with respect to the machine stator. Accordingly, the fixing of the resolver stator with respect to the machine stator may be just as well obtained by fixing the resolver stator to another body, such as a framework, to which or with respect to which the machine stator is fixed.

According to another embodiment of the invention step c) comprises fixing of the resolver rotor in a predetermined position to a shaft of the machine rotor. The rotor shaft is mostly comparatively well accessible, so that this is mostly an advantageous way to fix the resolver rotor with respect to the machine rotor.

According to another embodiment of the invention the resolver rotor is in step c) brought into only one possible position for fixing it with respect to the machine rotor when carrying out this fixing, and the step c) may then also comprise bringing engagement means of the resolver rotor into engagement with engagement means of said rotor shaft when fixing the resolver rotor to this shaft.

According to another embodiment of the invention steps a) - c) are carried out with an accuracy with respect to obtaining said predetermined positions resulting in a maximum possible deviation of the machine rotor position in which the resolver rotor and the resolver stator is in a predetermined relationship from the machine rotor position in which the machine rotor and the machine stator is in the same predetermined relationship below a predetermined value, in which this predetermined value is a mechanical angle of 360°/2(number of poles of the rotor). By applying such an accuracy when carrying out the steps a) - c) it is ensured that it is known which resolver pole is in a position adjacent to a machine rotor pole.

According to another embodiment of the invention the method is carried out on an electric machine having 8 poles on the rotor and 4 poles on the resolver rotor, and the step a) - c) are carried out so that said predetermined value of maximum deviation is below 22.5°, preferably below 10°. The deviation of the electricial angle has theoretically to be below 90° for enabling a calibration of the resolver. That would mean a maximum deviation of the mechanical angle in this case of 90/4 = 22.5°. However, parameters of the machine and possibly also other parameters, such as for a machine used in a railway vehicle the torque needed to move the vehicle, may make it preferred to restrict the maximum deviation of the electrical angle to be 40° which in this embodiment means a corresponding maximum deviation of the mechanical angle of 10°.

According to another embodiment of the invention the method is carried out on a track-bound vehicle electric machine, which constitutes a particularly advantageous application of the present invention.

According to another embodiment of the invention the method is carried out upon an electric machine mounted in a track-bound vehicle, and step d) is carried out by driving the vehicle from a rest position. The resolver may by this be brought into a state in which it is able to reliably deliver information about the instantaneous position of the machine rotor with respect to the machine stator for use for controlling said exchange of electric power before any currents are generated which may be harmful to the electric machine or equipment associated therewith.

According to another embodiment of the invention the method is carried out on an electric machine with a rotor having a plurality of permanent magnets, which is one preferred application of the present invention.

According to another embodiment of the invention the method is carried out on an electric machine designed to be connected to a said AC source delivering an alternating voltage to said stator winding of 500 V - 5 kV or 1.5 - 3.5 kV.

Further advantages as well as advantageous features of the invention will appear from the following description of embodiments of the invention.

### BRIEF DESCRIPTION OF THE DRAWINGS

With reference to the appended drawings, below follows a specific description of embodiments of the invention cited as examples.

In the drawings:
- Fig 1: is a very schematic view illustrating how a track-bound vehicle electric machine of the type to which the method according to the present invention may be directed may be connected and controlled in such a vehicle,
- Fig 2: is a very schematic side elevation view illustrating the stator and the rotor of an electric machine of the type to which a method according to the present invention may be applied,
- Fig 3: is an exploded view illustrating how a method according to an embodiment of the present invention may be carried out on a force ventilated or water cooled electric permanent magnet machine,
- Fig 4 and 5: are very schematic views illustrating how the machine stator winding is aligned with a stator house,
- Fig 6 and 7: are simplified views used to illustrate the fixing of the resolver rotor in a predetermined position with respect to the machine rotor for the machine shown in Fig 3, and
- Fig 8: is a view corresponding to Fig 3 illustrating a method according to another embodiment of the invention carried out on a self-ventilated electric machine.

### DETAILED DESCRIPTION OF EMBODIMENTS OF THE INVENTION

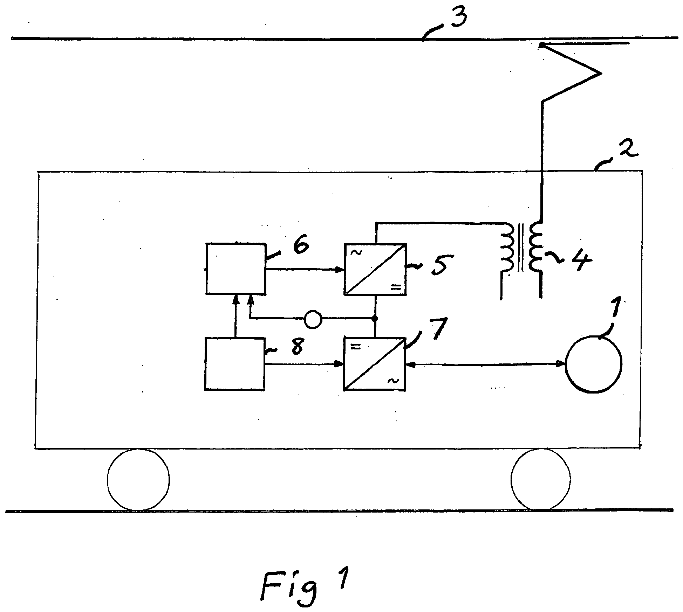

Fig 1 illustrates schematically the arrangement and control of an electric synchronous machine 1 in a track-bound vehicle 2, such as a rail vehicle, for generating a traction force on this vehicle. The method according to the present invention is well suited for providing such an electric machine with a resolver in a state able to deliver information about the instantaneous position of a rotor of this machine with respect to a stator thereof. It is shown how the vehicle is in this case configured to move along an AC-supply line 3, which accordingly acts as an AC source and which may for example carry a one-phase alternating voltage of 15 kV and 16 2/3 Hz (Sweden) and 25 kV and 50 Hz (Denmark). However, the invention is not restricted to such an AC source, but the vehicle may have any other conceivable corresponding source, such as a diesel motor.

The vehicle has a transformer 4 for transforming the voltage from the supply line 3 to a suitable level. The secondary winding of the transformer is connected to a converter 5 making it possible to obtaining a control of the power flow between the supply line and the vehicle. This converter is controlled by a first control unit 6 for generating a direct voltage of for example 1.5 - 3 kV fed to a further converter 7 controlled through a second control unit 8 for generating a train of pulses according to a Pulse Width Modulation pattern for delivering a three-phase alternating voltage connected to the stator winding (not shown) of the electric machine 1 for driving the vehicle. It is important for the control unit 8 to know the instantaneous position of the rotor of the electric machine 1 with respect to the stator thereof, in fact the position of the rotor poles with respect to the stator winding, for applying a determined torque to the rotor with a minimum of electric power consumed, and this may be obtained by a said resolver associated with the electric machine 1.

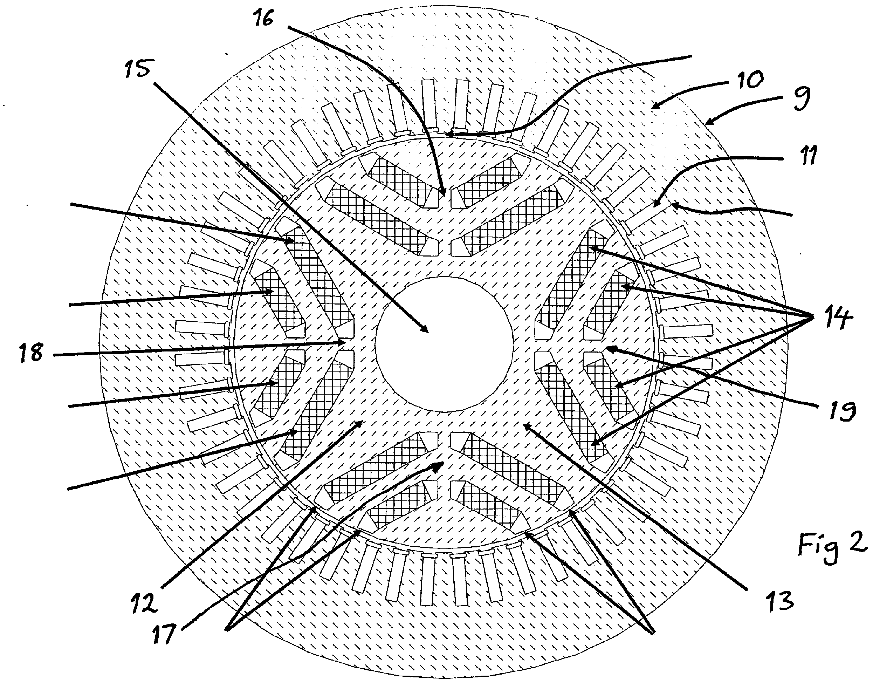

Fig 2 shows schematically in an axial end view some of the main parts of an electric machine to which a method according to the present invention is applicable. The invention is not restricted to any power levels of such machines, but these are normally designed to consume/deliver powers of some kV - several MW. This track-bound vehicle electric machine has a stator 9 with a stator body 10 with a stator winding 11 wound therearound and configured to electrically create a plurality of stator poles, in this case 4, disposed around the inner periphery of the stator body.

The electric machine further comprises a rotor 12, which as the stator body is preferably made of a high number of thin steel laminates pressed together for keeping eddy current losses in these bodies at low levels. The rotor body 13 is rotatably disposed within the stator and has a plurality of permanent magnets 14 buried therein. The rotor body 13 is rigidly connected with respect to rotation to a rotor shaft 15, which is connected to the wheel axle of the vehicle 2, possibly through a gear box.

The permanent magnets are arranged according to a "large V" and a "small V" per pole so as to form two north poles 16, 17 and two south poles 18, 19. For appropriate control of the electric machine through control of the converter 7 it is vital to continuously know the relative position of these rotor poles with respect to the stator poles.

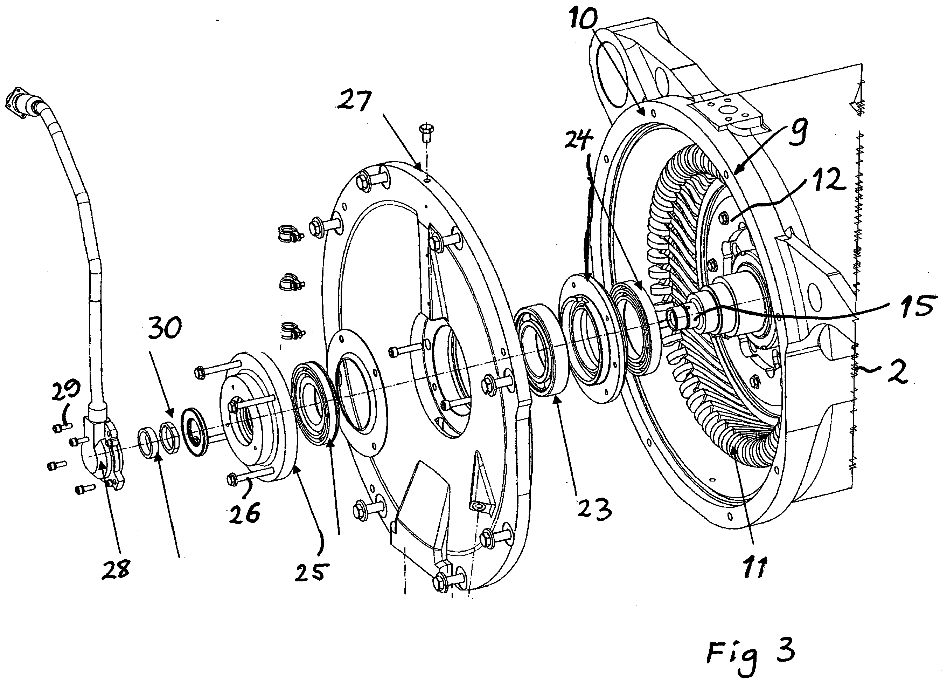

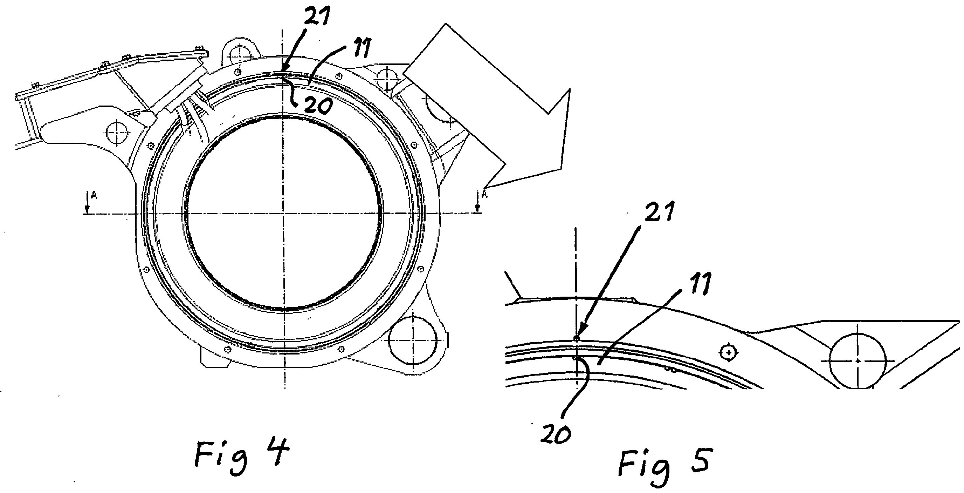

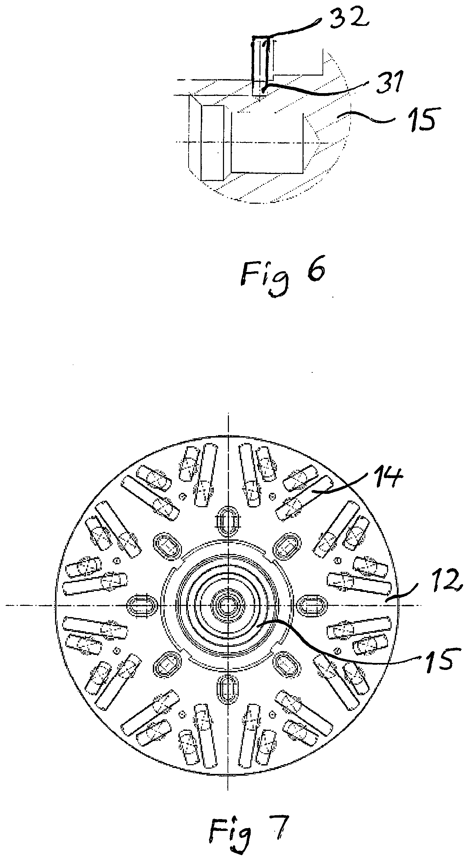

Fig 3 illustrates more in detail a possible actual construction of such an electric machine by an exploded view of the nondrive end, i.e. the end opposite to said gear box, of a forced ventilated or water cooled such electric machine. A method according to an embodiment of the present invention for providing this electric machine 2 with a resolver in a state able to deliver information about the instantaneous position of a rotor of this machine with respect to a stator of the machine will now be described while simultaneously also making reference to Figs 4-7. The method comprises a step of fixing the stator winding 11 in a predetermined position with respect to the stator body 10, and this is obtained by aligning a predetermined point 20, as a starting point, of the stator winding with respect to a marking 21, such as optical or physical, on the stator body 10 (see Fig 4 and Fig 5) when fixing the winding with respect to the stator body. The marked stator wound shall in this embodiment line up to the vertical centre line of the stator body with an accuracy of +/- 5 mm for a radius of the stator body of 250 mm, although a lower accuracy, such as ±10 mm will also do.

A shaft 15 onto which the rotor 12 is fixed by shrinkage is received in a ball bearing 23 surrounded by an inner bearing lid 24 and an outer bearing lid 25. The outer bearing lid 25 is connected to the inner bearing lid 24 by bolts 26 also fixing the bearing lids to an end shield 27 fixed to a stator body 10.

A resolver stator 28 is through bolts 29 fixed in a predetermined position with respect to the machine stator by being fixed to the outer bearing lid. The bolts 29 of the resolver stator and corresponding holes in said bearing lid 25 are so arranged that the resolver stator may only be fixed to the bearing lid 25 in a determined position with respect thereto.

The end of the rotor shaft 15 is provided with a blind hole 31 into which a pin 32 is inserted, and this pin enters into engagement with a corresponding slot formed in a resolver rotor 30 when mounting the resolver rotor 30 to the rotor shaft and by that fixing the resolver rotor in a only one possible predetermined position with respect to the machine rotor 12. Alternatively, the rotor shaft may instead be provided with a female member to be engaged with a male member in the resolver rotor.

When all these mounting work has been done the machine rotor is made to rotate by controlling the converter 7 connected thereto and electric parameters influenced by this rotation are measured. When the electric machine is mounted in a track-bound vehicle this means that the vehicle is started from a rest position. The relative position of the resolver rotor and the resolver stator is calculated as a measure of the relative position of the machine rotor and the machine stator by making the machine rotor rotate with a number of revolutions above a threshold value corresponding to such a high voltage applied across the stator winding that the actual torque applied by the stator winding on the rotor may be determined. The converter may then be controlled to deliver a zero torque to the rotor through the stator winding and the relative position of the resolver rotor and the resolver stator may be calculated under this zero torque condition. The software may by this connect each relative position of the resolver rotor and the resolver stator to a determined relative position of the machine rotor and the machine stator.

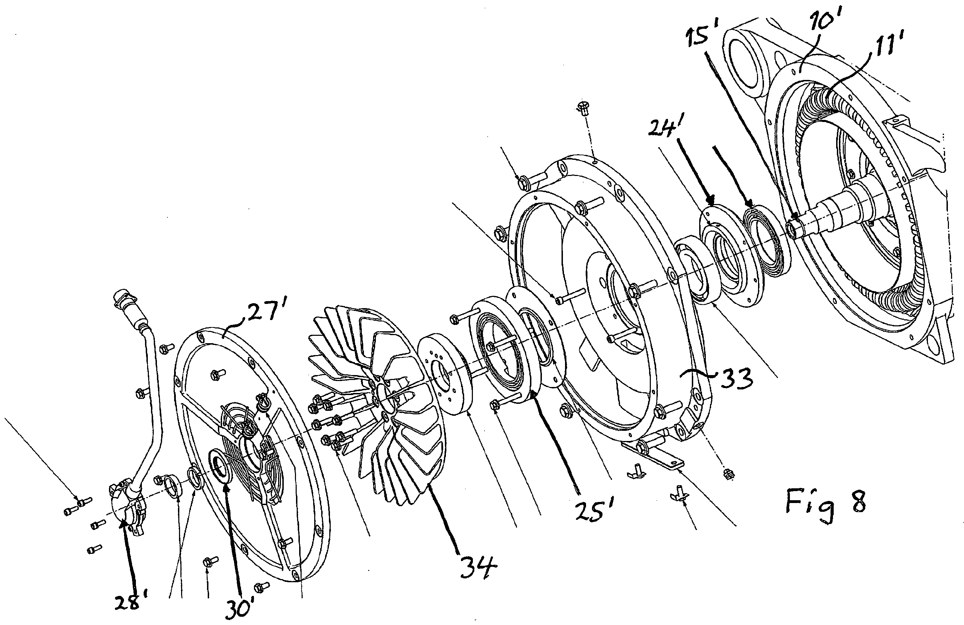

Fig 8 is a view corresponding to Fig 3 indicating that a method according to the present invention may just as well be carried out for a self-ventilated electric machine, and parts corresponding to parts of the machine shown in Fig 3 have been provided with the same reference numerals added with an asterix. It is shown how this machine has also a fan casing 33, in which an impeller 34 secured to the rotor shaft 15' is received. The end shield 27' is here secured to the fan casing 33, which in its turn is secured to the stator body 10'.

The invention is of course not in any way restricted to the embodiments described above, but many possibilities to modifications thereof would be apparent to a person with ordinary skill in the art without departing from the scope of the invention as defined in the appended claims.

## Claims

1. A method for providing an electric synchronous machine (2) with a resolver in a state able to deliver information about the instantaneous position of a rotor (12) of said machine with respect to a stator (9) of the machine to be used for controlling exchange of electric power between a winding (11) of said stator and an AC source or receiver (3) comprises the following steps:
a) fixing said stator winding (11) in a predetermined position with respect to said machine stator (9),
b) fixing a resolver stator (28) in a predetermined position with respect to said machine stator (9),
c) fixing a resolver rotor (30) in a predetermined position with respect to said machine rotor (12),
d) making the machine rotor (12) rotate and measuring electric parameters influenced by this rotation, and
e) calculating, by use of software, the relative position of the resolver rotor (30) and the resolver stator (28) as a measure of the relative position of the machine rotor (12) and the machine stator (9), so that the instantaneous relative position of the machine rotor (12) with respect to the machine stator (9) after that is known by knowledge of the relative position of the resolver rotor (30) with respect to the resolver stator (28) for use when controlling said exchange of electric power,
in which the steps a), b) and c) may be carried out in an arbitrary order, **characterized in that** step d) is carried out by controlling a converter (7) connected to an electric power source to deliver an alternating voltage to said stator winding (11) by Pulse Width Modulation for rotating the machine rotor (12), wherein said converter (7) is in step d) controlled to make the machine rotor (12) rotate with a number of revolutions above a threshold value corresponding to such a high voltage applied across the stator winding (11) that the actual torque applied by the stator winding on the rotor (12) may be determined, and that the converter (7) is then controlled to deliver a zero torque to the rotor (12) through the stator winding (11) and the relative position of the resolver rotor (30) and the resolver stator (28) is in step e) determined under this zero torque condition.

2. A method according to claim 1, **characterized in that** step a) comprises aligning of a predetermined point, such as a starting point (20), of said stator winding (11) with respect to a marking (21), such as optical or physical, on a stator body (10) when fixing said winding (11) with respect to this stator body (10).

3. A method according to claim 1 or 2, **characterized in that** step b) comprises aligning of the resolver stator (28) with respect to the machine stator (9), such as by introduction of male members (29) in female members, such as bolts in holes, when fixing the resolver stator (28) with respect to the machine stator (9).

4. A method according to claim 3, **characterized in that** said resolver stator (28) is aligned with respect to said machine stator (9) by fixing the resolver stator (28) by means allowing such fixing in only one possible position.

5. A method according to any of the preceding claims, **characterized in that** it comprises the step of fixing a stator body (10) of said machine stator (9) in a predetermined position to a framework, such as a stator house, and that in step b) the resolver stator (28) is secured to said framework in a predetermined position and by that in a predetermined position with respect to the machine stator (9).

6. A method according to any of the preceding claims, **characterized in that** step c) comprises fixing of the resolver rotor (30) in a predetermined position to a shaft (15) of the machine rotor (12).

7. A method according to any of the preceding claims, **characterized in that** in step c) said resolver rotor (30) is brought into only one possible position for fixing it with respect to the machine rotor (12) when carrying out this fixing.

8. A method according to claims 6 and 7, **characterized in that** step c) comprises bringing engagement means of the resolver rotor (30) into engagement with engagement means (32) on said rotor shaft (15) when fixing the resolver rotor (30) to this shaft (15).

9. A method according to any of the preceding claims, **characterized in that** the steps a) - c) are carried out with an accuracy with respect to obtaining said predetermined positions resulting in a maximum possible deviation of the machine rotor position in which the resolver rotor (30) and the resolver stator (28) is in a predetermined relationship from the machine rotor position in which the machine rotor (12) and the machine stator (9) is in the same predetermined relationship below a predetermined value, in which this predetermined value is a mechanical angle of 360°/2(number of poles of the rotor).

10. A method according to claim 9, **characterized in that** it is carried out on an electric machine having 8 poles on the rotor and 4 poles on the resolver rotor, and that the step a) - c) are carried out so that said predetermined value of maximum deviation is below 22.5°, preferably below 10°.

11. A method according to any of the preceding claims, **characterized in that** it is carried out on a track-bound vehicle electric machine (1).

12. A method according to claim 11, **characterized in that** it is carried out upon an electric machine (1) mounted in a track-bound vehicle (2), and that step d) is carried out by driving the vehicle from a rest position.

13. A method according to any of the preceding claims, **characterized in that** it is carried out on an electric machine (1) with a rotor (12) having a plurality of permanent magnets (14).

14. A method according to any of the preceding claims, **characterized in that** it is carried out on an electric machine (1) designed to be connected to a said AC source (3) delivering an alternating voltage to said stator winding of 500 V - 5 kV or 1.5 - 3.5 kV.

## Patentansprüche

1. Verfahren zum Bereitstellen einer elektrischen Synchronmaschine (2) mit einem Drehgeber in einem Zustand, der es ermöglicht Informationen über die aktuelle Position eines Rotors (12) der Maschine in Bezug auf einen Stator (9) der Maschine zu liefern, und der zum Steuern des Austauschs von elektrischer Leistung zwischen einer Wicklung (11) des Stators und einer Wechselstromquelle oder -senke (3) verwendet wird, wobei esfolgende Schritte umfasst:
a) Befestigen der Statorwicklung (11) in einer vorbestimmten Position in Bezug auf den Maschinenstator (9),
b) Befestigen eines Drehgeberstators (28) in einer vorbestimmten Position in Bezug auf den Maschinenstator (9),
c) Befestigen eines Drehgeberrotors (30) in einer vorbestimmten Position in Bezug auf den Maschinenrotor (12),
d) Erzeugen einer Rotation des Maschinenrotors (12) und Messen der durch die Rotation beeinflussten elektrischen Parameter, und
e) unter Verwendung von Software erfolgendes Berechnen der relativen Position des Drehgeberrotors (30) und des Drehgeberstators (28) als ein Maß für die relative Position des Maschinenrotors (12) und des Maschinenstators (9) derart, dass danach die aktuelle relative Position des Maschinenrotors (12) in Bezug auf den Maschinenstator (9) durch die Kenntnis der relativen Position des Drehgeberrotors (30) in Bezug auf den Drehgeberstator (28) zur Verwendung beim Steuern des Austauschs elektrischer Leistung bekannt ist,
wobei die Schritte a), b) und c) in beliebiger Reihenfolge durchgeführt werden können,
**dadurch gekennzeichnet, dass**
der Schritt d) ausgeführt wird, indem ein Wandler (7), der mit einer elektrischen Energiequelle verbunden ist, zum Rotieren des Maschinenrotors (12) derart angesteuert wird, dass er mittels Pulsweitenmodulation eine Wechselspannung an die Statorwicklung (11) liefert, wobei
der Wandler (7) in dem Schritt d) derart angesteuert wird, dass sich der Maschinenrotor (12) mit einer Anzahl von Umdrehungen dreht, die über einem Schwellenwert liegt, der einer an die Statorwicklung (11) angelegten Spannung entspricht, die so hoch ist, dass das tatsächliche Drehmoment, das von der Statorwicklung an den Rotor (12) angelegt wird, bestimmt werden kann, und dass der Wandler (7) dann derart angesteuert wird, dass über die Statorwicklung (11) ein Drehmoment Null an den Rotor (12) angelegt wird und die relative Position des Drehgeberrotors (30) zu dem Drehgeberstator (28) in dem Schritt e) unter diesem Nulldrehmomentzustand bestimmt werden.

2. Verfahren nach Anspruch 1, **dadurch gekennzeichnet, dass** der Schritt a) ein Ausrichten eines vorbestimmten Punktes, beispielsweise eines Startpunktes (20), der Statorwicklung (11) bezüglich einer, beispielsweise optischen oder physikalischen, Markierung (21) an einem Statorkörper (10) umfasst, wenn die Wicklung (11) in Bezug auf diesen Statorkörper (10) fixiert wird.

3. Verfahren nach Anspruch 1 oder 2, **dadurch gekennzeichnet, dass** Schritt b) ein Ausrichten des Drehgeberstators (28) in Bezug auf den Maschinenstator (9) umfasst, beispielsweise durch Einführen von männlichen Elementen (29) in weibliche Elemente, beispielsweise Bolzen in Löcher, wenn der Drehgeberstator (28) in Bezug zum Maschinenstator (9) fixiert wird.

4. Verfahren nach Anspruch 3, **dadurch gekennzeichnet, dass** der Drehgeberstator (28) in Bezug auf den Maschinenstator (9) ausgerichtet wird, indem der Drehgeberstator (28) durch Mittel befestigt wird, die eine solche Befestigung in nur einer möglichen Position erlauben.

5. Verfahren nach einem der vorhergehenden Ansprüche, **dadurch gekennzeichnet, dass** es den Schritt eines Befestigens eines Statorkörpers (10) des Maschinenstators (9) in einer vorbestimmten Position an einem Rahmenwerk, wie einem Statorgehäuse, umfasst und dass in dem Schritt b) der Drehgeberstator (28) an dem Rahmenwerk in einer vorbestimmten Position und dadurch in einer vorbestimmten Position bezüglich des Maschinenstators (9) befestigt wird.

6. Verfahren nach einem der vorhergehenden Ansprüche, **dadurch gekennzeichnet, dass** der Schritt c) das Befestigen des Drehgeberrotors (30) in einer vorbestimmten Position an einer Welle (15) des Maschinenrotors (12) umfasst.

7. Verfahren nach einem der vorhergehenden Ansprüche, **dadurch gekennzeichnet, dass** in dem Schritt c) der Drehgeberrotor (30) in nur eine beim Befestigen mögliche Position gebracht wird, um ihn in Bezug auf den Maschinenrotor (12) zu befestigen.

8. Verfahren nach den Ansprüchen 6 und 7, **dadurch gekennzeichnet, dass** der Schritt c) umfasst, dass Eingriffsmittel des Drehgeberrotors (30) mit Eingriffsmitteln (32) an der Rotorwelle (15) in Eingriff gebracht werden, wenn der Drehgeberrotor (30) an dieser Welle (15) befestigt wird.

9. Verfahren nach einem der vorhergehenden Ansprüche, **dadurch gekennzeichnet, dass** die Schritte a) bis c) mit einer Genauigkeit in Bezug auf das Erhalten der vorbestimmten Positionen ausgeführt werden, die zu einer maximal möglichen Abweichung der Maschinenrotorposition, in welcher der Drehgeberrotor (30) und der Drehgeberstator (28) in einer vorbestimmten Beziehung sind in bezug auf die Maschinenrotorposition, in welcher der Maschinenrotor (12) und der Maschinenstator (9) in der gleichen vorbestimmten Beziehung sind, unterhalb eines vorbestimmten Wertes, wobei dieser vorbestimmte Wert ein mechanischer Winkel von 360°/2(Anzahl der Pole des Rotors) ist.

10. Verfahren nach Anspruch 9, **dadurch gekennzeichnet, dass** es an einer elektrischen Maschine mit 8 Polen am Rotor und 4 Polen am Drehgeberrotor durchgeführt wird, und dass die Schritte a) - c) so ausgeführt werden, dass der vorgegebene Wert der maximalen Abweichung unter 22,5°, vorzugsweise unter 10°, liegt.

11. Verfahren nach einem der vorhergehenden Ansprüche, **dadurch gekennzeichnet, dass** es an einer elektrischen Maschine (1) eines spurgebundenen Fahrzeugs durchgeführt wird.

12. Verfahren nach Anspruch 11, **dadurch gekennzeichnet, dass** es an einer elektrischen Maschine (1) ausgeführt wird, die in einem spurgebundenen Fahrzeug (2) angebracht ist, und dass Schritt d) ausgeführt wird, indem das Fahrzeug aus einer Ruheposition gefahren wird.

13. Verfahren nach einem der vorhergehenden Ansprüche, **dadurch gekennzeichnet, dass** es an einer elektrischen Maschine (1) mit einem Rotor (12) mit mehreren Permanentmagneten (14) durchgeführt wird.

14. Verfahren nach einem der vorhergehenden Ansprüche, **dadurch gekennzeichnet, dass** es an einer elektrischen Maschine (1) ausgeführt wird, wobei diese dazu ausgebildet ist an die Wechselstromquelle (3) angeschlossen zu werden, die eine Wechselspannung an die Statorwicklung von 500 V - 5 kV oder 1,5 - 3,5 kV liefert.

## Revendications

1. Procédé pour pourvoir une machine synchrone électrique (2) d'un résolveur dans un état apte à délivrer des informations relatives à la position instantanée d'un rotor (12) de ladite machine par rapport à un stator (9) de la machine à utiliser pour commander un échange d'énergie électrique entre un enroulement (11) dudit stator et une source de courant alternatif, CA, ou un récepteur (3), comprenant les étapes suivantes :
a) la fixation dudit enroulement de stator (11) à une position prédéterminée par rapport audit stator de machine (9),
b) la fixation d'un stator de résolveur (28) à une position prédéterminée par rapport audit stator de machine (9),
c) la fixation d'un rotor de résolveur (30) à une position prédéterminée par rapport audit rotor de machine (12),
d) la mise en rotation du rotor de machine (12) et la mesure de paramètres électriques influencés par cette rotation, et
e) le calcul, par l'utilisation d'un logiciel, de la position relative du rotor de résolveur (30) et du stator de résolveur (28) en tant qu'une mesure de la position relative du rotor de machine (12) et du stator de machine (9), de sorte que la position relative instantanée du rotor de machine (12) par rapport au stator de machine (9) après cela soit connue par la connaissance de la position relative du rotor de résolveur (30) par rapport au stator de résolveur (28) pour une utilisation lors de la commande dudit échange d'énergie électrique,
dans lequel les étapes a), b) et c) peuvent être effectuées dans un ordre arbitraire,
**caractérisé en ce que** l'étape d) est effectuée en commandant à un convertisseur (7) raccordé à une source d'énergie électrique de délivrer une tension alternative audit enroulement de stator (11) par modulation de largeur d'impulsion pour faire tourner le rotor de machine (12),
dans lequel ledit convertisseur (7) est, à l'étape d), commandé pour faire tourner le rotor de machine (12) avec un nombre de tours supérieur à une valeur de seuil correspondant à une haute tension appliquée à travers l'enroulement de stator (11) de sorte que le couple réel appliqué par l'enroulement de stator sur le rotor (12) puisse être déterminé, et le convertisseur (7) est ensuite commandé pour délivrer un couple nul au rotor (12) par l'intermédiaire de l'enroulement de stator (11), et la position relative du rotor de résolveur (30) et du stator de résolveur (28) est, à l'étape e, déterminée dans cette condition de couple nul.

2. Procédé selon la revendication 1, **caractérisé en ce que** l'étape a) comprend l'alignement d'un point prédéterminé, comme un point de démarrage (20), dudit enroulement de stator (11) par rapport à un marquage (21), tel qu'optique ou physique, sur un corps de stator (10) lors de la fixation dudit enroulement (11) par rapport à ce corps de stator (10).

3. Procédé selon la revendication 1 ou 2, **caractérisé en ce que** l'étape b) comprend l'alignement du stator de résolveur (28) par rapport au stator de machine (9), comme par l'introduction d'organes mâles (29) dans des organes femelles, comme des boulons dans des trous, lors de la fixation du stator de résolveur (28) par rapport au stator de machine (9).

4. Procédé selon la revendication 3, **caractérisé en ce que** ledit stator de résolveur (28) est aligné par rapport audit stator de machine (9) par la fixation du stator de résolveur (28) par des moyens permettant une telle fixation à une seule position possible.

5. Procédé selon l'une quelconque des revendications précédentes, **caractérisé en ce qu'**il comprend l'étape de la fixation d'un corps de stator (10) dudit stator de machine (9) à une position prédéterminée sur un châssis, comme un boîtier de stator, et **en ce que**, à l'étape b, le stator de résolveur (28) est attaché audit châssis à une position prédéterminée et en conséquence à une position prédéterminée par rapport au stator de machine (9).

6. Procédé selon l'une quelconque des revendications précédentes, **caractérisé en ce que** l'étape c) comprend la fixation du rotor de résolveur (30) à une position prédéterminée sur un arbre (15) du rotor de machine (12).

7. Procédé selon l'une quelconque des revendications précédentes, **caractérisé en ce que**, à l'étape c), ledit rotor de résolveur (30) est mis à une seule position possible pour le fixer par rapport au rotor de machine (12) lors de l'exécution de cette fixation.

8. Procédé selon les revendications 6 et 7, **caractérisé en ce que** l'étape c) comprend la mise en prise de moyens de mise en prise du rotor de résolveur (30) avec des moyens de mise en prise (32) sur ledit arbre de rotor (15) lors de la fixation du rotor de résolveur (30) sur cet arbre (15).

9. Procédé selon l'une quelconque des revendications précédentes, **caractérisé en ce que** les étapes a) à c) sont effectuées avec une précision par rapport à l'obtention desdites positions prédéterminées engendrant un écart possible maximal de la position de rotor de machine à laquelle le rotor de résolveur (30) et le stator de résolveur (28) sont dans une relation prédéterminée par rapport à la position de rotor de machine à laquelle le rotor de machine (12) et le stator de machine (9) sont dans la même relation prédéterminée, inférieur à une valeur prédéterminée, dans lequel cette valeur prédéterminée est un angle mécanique de 360°/2(nombre de pôles du rotor).

10. Procédé selon la revendication 9, **caractérisé en ce qu'**il est effectué sur une machine électrique comportant 8 pôles sur le rotor et 4 pôles sur le rotor de résolveur, et **en ce que** les étapes a) à c) sont effectuées de sorte que ladite valeur prédéterminée d'écart maximal soit inférieure à 22,5°, de préférence inférieure à 10°.

11. Procédé selon l'une quelconque des revendications précédentes, **caractérisé en ce qu'**il est effectué sur une machine électrique de véhicule ferroviaire (1).

12. Procédé selon la revendication 11, **caractérisé en ce qu'**il est effectué sur une machine électrique (1) montée dans un véhicule ferroviaire (2), et **en ce que** l'étape d) est effectuée en conduisant le véhicule à partir d'une position de repos.

13. Procédé selon l'une quelconque des revendications précédentes, **caractérisé en ce qu'**il est effectué sur une machine électrique (1) avec en rotor (12) comportant une pluralité d'aimants permanents (14).

14. Procédé selon l'une quelconque des revendications précédentes, **caractérisé en ce qu'**il est effectué sur une machine électrique (1) conçue pour être raccordée à une dite source de courant alternatif (3) délivrant une tension alternative audit enroulement de stator de 500 V à 5 kV ou de 1,5 à 3,5 kV.
